**Europäisches Patentamt**

**European Patent Office**

**Office européen des brevets**

(19)

(11) Publication number: **0 060 561**
**A2**

(12) # EUROPEAN PATENT APPLICATION

(21) Application number: **82102132.6**

(22) Date of filing: **16.03.82**

(51) Int. Cl.³: **B 60 J 5/04**, B 32 B 27/00

(30) Priority: **16.03.81 JP 36564/81**

(43) Date of publication of application: **22.09.82**
**Bulletin 82/38**

(84) Designated Contracting States: **DE FR GB**

(71) Applicant: **NISSAN MOTOR COMPANY, LIMITED, No.2, Takara-cho, Kanagawa-ku, Yokohama-shi Kanagawa-ken 221 (JP)**

(72) Inventor: **Okada, Yukio c/o Nissan Motor Company Limited, Ogikubo Plant 5-1, Momoi 3-chome, Suginami-ku Tokyo (JP)**
Inventor: **Nagata, Yukio c/o Nissan Motor Company Limited, Ogikubo Plant 5-1, Momoi 3-chome, Suginami-ku Tokyo (JP)**
Inventor: **Miura, Toshikatu c/o Nissan Motor Company Limited, Ogikubo Plant 5-1, Momoi 3-chome, Suginami-ku Tokyo (JP)**
Inventor: **Yoshioka, Tsutomu c/o Nissan Motor Company Limited, Ogikubo Plant 5-1, Momoi 3-chome, Suginami-ku Tokyo (JP)**

(74) Representative: **Patentanwälte TER MEER - MÜLLER - STEINMEISTER, Triftstrasse 4, D-8000 München 22 (DE)**

(54) Structure for reinforcing a plate-like member.

(57) A structure for reinforcing a plate-like member (20), includes a expandable portion (22) and a reinforcing cover (23) laminated onto a surface of the expandable portion (22). The expandable portion (22) and the reinforcing cover (23) combine to form a rib-like reinforcing part (24) of predetermined total height or thickness. The rib-like reinforcing part (24) is integrally bonded to the plate-like member (20) to reinforce the plate-like member (20). The side portions (25, 26) of the expandable portion (22) are not covered by the reinforcing cover (23) so that the side portions thereof are exposed.

## BACKGROUND OF THE INVENTION

This invention relates to a reinforcing structure for plate-like members, particularly panels used in automobiles, for example, outer panels such as door outer panels, roof panels and the like.

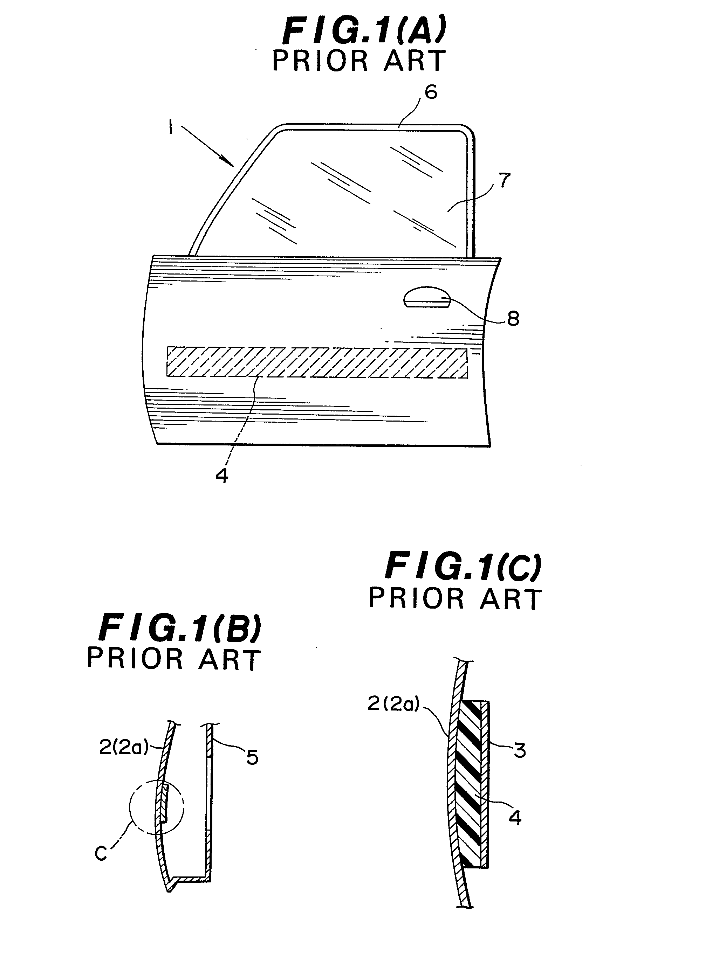

An exemplary conventional reinforcing structure is shown in Fig. 1-(A), (B) and (C). A reinforcing member 4 made of a thermosetting resin bonded to a reinforcing material composed of glass fibers and non-woven fabric is applied to the inner surface of a door outer panel 2 (metallic plate-like member 2a) of a door 1, and thereafter the reinforcing member 4 is hardened by heating.

Referring further to the drawings, 5 is the door inner panel, 6 is the door window sash, 7 is the side window glass nnd 8 is the outside door handle.

With such a reinforcing structure, unless the thickness thereof is considerably increased, the desired reinforcing effect cannot be obtained. Hence, the required amount of the resin material would increase the production cost and the weight. Besides the foregoing problems, it is difficult to conform the reinforcing member perfectly to the shape of the plate-like member to be reinforced, if a reinforcing member molded and hardened in advance is to be applied to the plate-like member.

Also if a reinforcing structure is formed by

0060561

bonding a reinforcing member composed of unhardened resin to the plate-like member and thermosetting the same, the thick resin layer will still not be able to conform to a curved surface of the plate-like member with a small radius of curvature.

In either case, complete adhesion of the reinforcing member and the plate-like member is difficult to obtain. Furthermore, particularly with automobiles, weight reduction is important, and hence it is undesirable to increase the weight, even for the purpose of reinforcement.

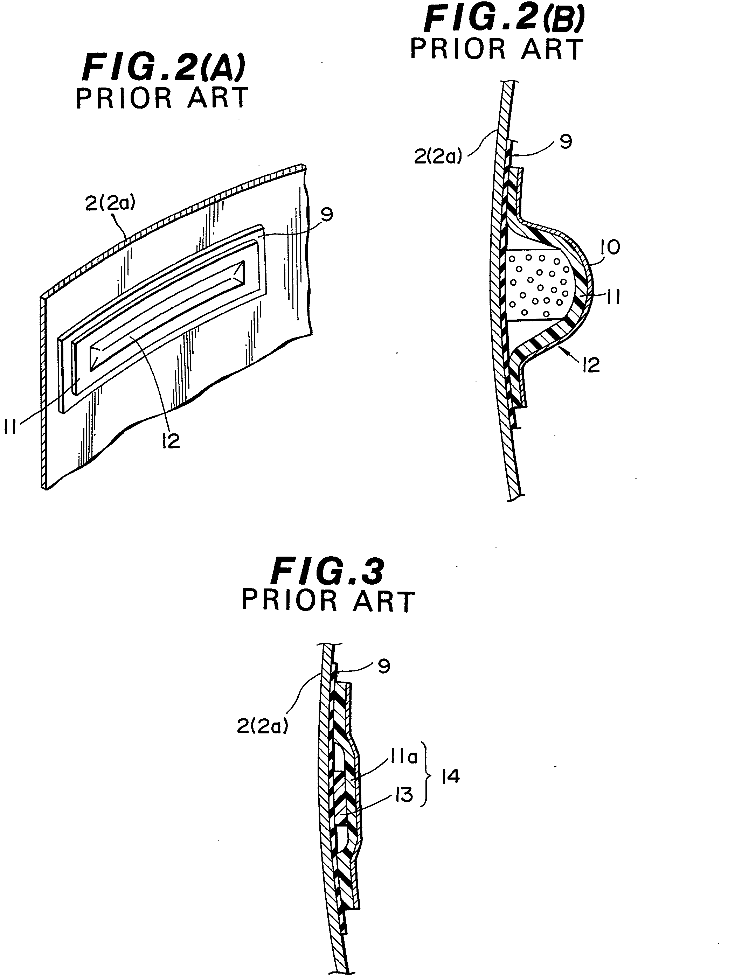

Under the circumstances, we previously proposed a panel for an automobile in which, as illustrated in Fig. 2(A) and (B), a thermosetting resinous reinforcing member 11, made of a tough epoxy resin, for example, including a reinforcing material 10 such as glass fibers, is applied directly to the inner surface 2a of a metallic panel 2 serving as a door outer panel, or on the coating film 9 plated onto said inner surface in advance for rust proofing. Within said reinforcing member 11, a bead-like projection 12 is formed in the manner as later described. The reinforcing structure previously proposed by us solves all of the problems in the prior art.

In order to form said bead-like projection 12, a reinforcing material 14 is used, the basis of which is a sheet of unhardened epoxy resin 11a, as shown in Fig. 3. The reinforcing material 14 further includes an

appropriate quantity of an material which can expand irreversibly, such as a strip of expandable material 13 such as foamable polyethylene sheet or expandable epoxy sheet in the unexpanded state. By heat-treating the expandable strip 13 to cause it to expand, for example, during the coating-drying step at a later stage in the automotive assembly process, the bead-like projection 12 is formed in the reinforcing member 11.

Also, the heating induces hardening of the resin sheet 11a of the reinforcing member 11, thereby making a strong reinforcing structure and stengthening the member 11 in cooperation with the bead-like projection 12.

The improvement in the strength and rigidity of the plate-like or panel members brought about by the bead-like projection 12 is indeed conspicuous.

It has been discovered, however, as the result of later researches and experiments, that the parts of the reinforcing structure in direct contact with the outer panel 2a do not effectively contribute to the reinforcing, and that the desired improvement in the strength and rigidity of the plate-like member can also be achieved by replacing the prejection 12 which may have a "closed section" with a rib-shaped reinforcing part which is rather flat as a whole and has the desired thickness or height.

## SUMMARY OF THE INVENTION

According to this invention, a reinforcing structure includes a rib-shaped reinforcing part of desired thickness. The reinforcing part is formed integrally with the plate-like member to be reinforced. The reinforcing part consists of an expanded or foamed portion of desired height or thickness and a reinforcing cover which is fixed to the surface of said expanded portion.

BRIEF DESCRIPTION OF THE DRAWINGS

Fig. 1A is a front view of a prior art automobile door having a conventional reinforcing member;

Fig. 1B is a cross-sectional view of a portion of the automobile door shown in Fig. 1A;

Fig. 1C is a cross-sectional view of the portion encircled and labeled with the character C, of the door and reinforcing member shown in Fig. 1B;

Fig. 2A is a perspective view of a portion of another prior art automobile door in which a conventional reinforcing member is used;

Fig. 2B is a cross-sectional view of the door and reinforcing member shown in Fig. 2A;

Fig. 3 is a cross-sectional view of the door to which the reinforcing member is attached before heat-treating;

Fig. 4A is a front view of an automobile door in which a reinforcing structure of this invention is used;

Fig. 4B is a cross-sectional view taken along the line B-B in Fig. 4A;

Fig. 5 is a perspective view of an essential portion of the reinforcing structure indicated by the arrow V in Fig. 4B;

Fig. 6 is a cross-sectional view taken along the line VI-VI in Fig. 5;

Fig. 7 shows a reinforcing body prior to heat-treating; and

Fig. 8 is a cross-sectional view of a further embodiment of this invention, corresponding to Fig. 6.

## DESCRIPTION OF THE PREFERRED EMBODIMENTS

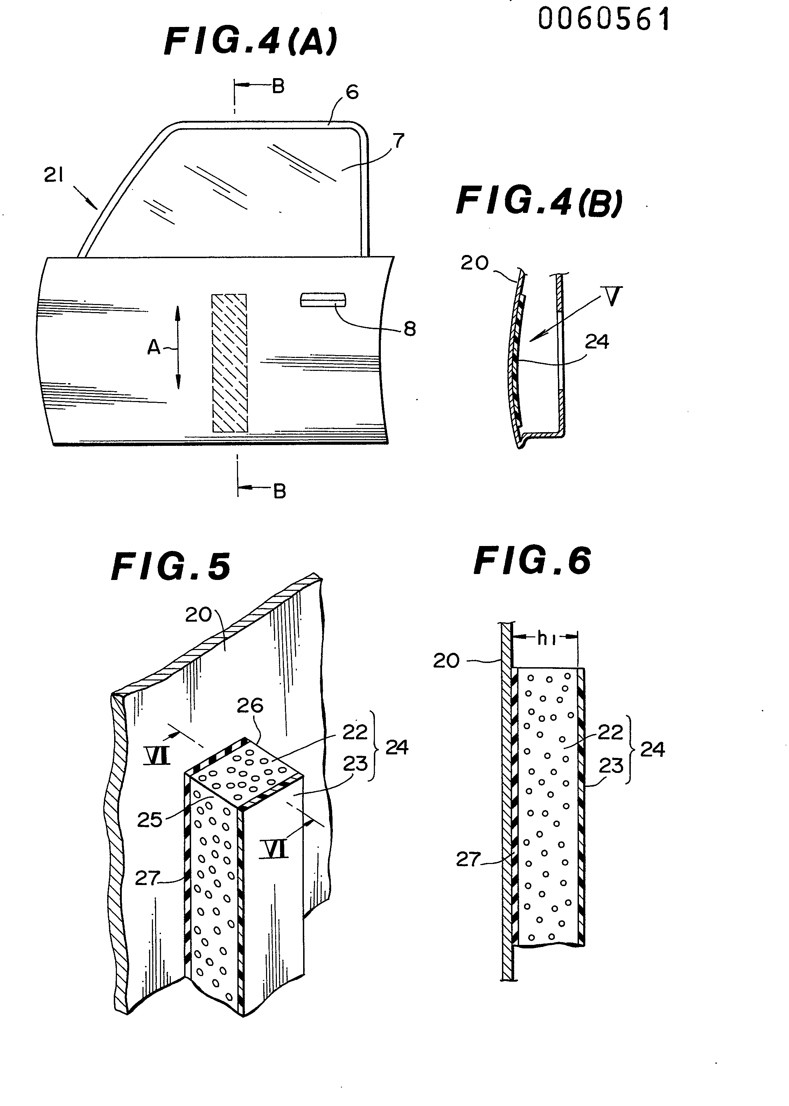

Figs. 4 through 7 show one embodiment of the present invention, in which 20 is a metallic plate-like member such as an door outer panel for an automobile. On the inner surface of said panel 20, a reinforcing part 24 is formed integrally with the outer panel 20 of the automobile door 21. The reinforcing part 24 is composed of an expanding part 22 which has previously expanded irreversibly aligned vertically along the door 21 as indicated by the arrow A and a reinforcing outer cover 23 which has been fixed in advance to the surface of the expanding portion 22. The reinforcing part 24 has a rectangular cross-section or approximately so. The sides 25 and 26 of the foaming portion 22 are exposed to form a so-called "open section" structure.

The expanding part 22 is formed of an expandable or foamable material 22a which will expand to a desired height ($h_1$ as shown in Fig. 6) when heated in an furnace, such as a coating-drying furnace or the like. Any material can be used if it expands in volume to a suitably great degree upon heat treatment. But, because the expanding portion 22 should have some strength after heat treatment, hard epoxy resins are preferred.

It is preferable that the expandable material 22a has an adhesive surface where it comes into contact with the door outer panel 20. Otherwise, additional adhesive material, for example an epoxy resin member 27 which is pliable to the surface in contact with the door outer panel. Particularly when good appearance of the metallic plate-like member 20 is important, as in a door outer panel, a soft-type epoxy resin material can be daubed on the back of the metallic plate-like member, in order to prevent local strain or sagging which is apt to occur when hard epoxy resins are added to the expandable material.

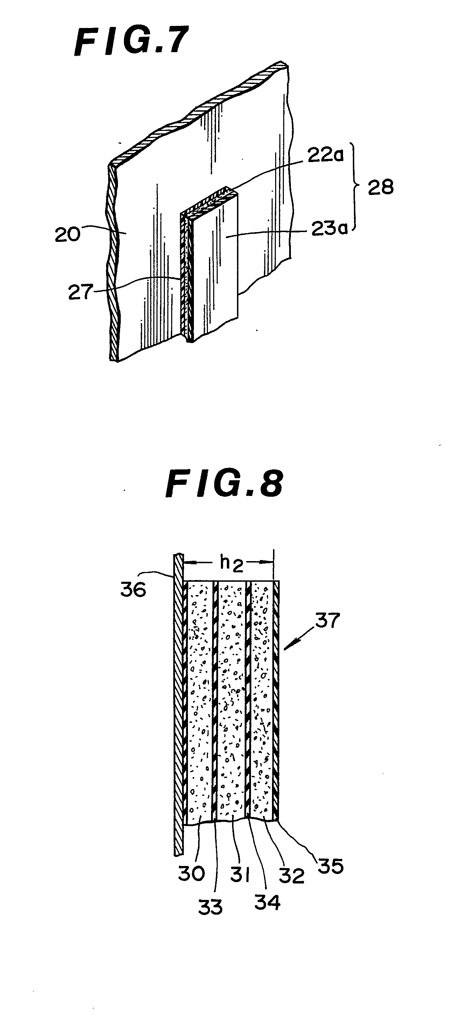

The outer cover 23 covers the expanding portion 22 to reinforce it. Any material which can provide a tough outer cover can be used for the material 23a for the outer cover 23. For example, epoxy resin and other thermosetting resins, glass fibers, woven and non-woven fabrics, carbon fiber, kraft paper and the like can be used either singly or in combination. As shown in Fig. 7, such an outer cover material 23a forms a thin, flat sheet-formed reinforcing body 28 prior to heat treating, in conjunction with the aforementioned expanded body 22a.

In order to obtain a reinforcing structure for a plate-like member, as shown in Fig. 7, the thin, flat sheet-formed reinforcing body 28 is bonded to the inner surface of the door outer panel 20. Then the reinforcing body 28 is heat-treated in the drying furnace used during the coating-bonding step of automotive assembly whereupon the expandable material 22a expands to the desired thickness or height, $h_1$, and thereafter hardens to form the expanded portion 22.

If an unhardened, B-stage epoxy resin material is used as the outer cover material 23a, it will be hardened by the heat-treatment following the expansion of the expandable material 22a, to form a tough outer cover portion 23. Also if glass fibers are used, they will slightly penetrate the surface of the foaming part 22 as the expandable material 22a expands. That is, a tough outer cover 23 will be formed by the glass fibers embedded in the surface of part 22.

As the expandable material 22a expands during heat treating, its surface in contact with the door outer panel 20, or the adhesive material 27 which has been applied to said surface in advance, partially melts and then hardens. Thus the expanding part is integrally bonded to the door outer panel 20.

Thus, the part 24 consists of an expanding portion 22 after expansion and a reinforcing outer cover portion 23 over the surface of the expanding part 23, the sum having height $h_1$.

An example will be explained.

A bisphenol A-type epoxy, which has not been flexibility-modified, and an amine-type hardener are blended to form an epoxy resin. Such an epoxy resin is further blended with an organic foaming agent, for example, dinitrosopentamethylenetetramine, and formed into a 1.0mm-thick hard, expandable epoxy sheet (kept unhardened, that is, kept at B-stage). The sheet was used as the expandable material 22a. From this and an outer cover material 23a formed from an unhardened (B-stage), 1.0mm-thick sheet of the aforesaid epoxy resin, a thin reinforcing strip 28 was prepared. The reinforcing strip 28 was affixed to a steel plate 55mm wide, 200mm long and 0.7mm thick. On the surface of the expanding material 22a facing said steel plate, furthermore, a thin coating of soft epoxy in unhardened state (B-stage) was applied to serve as the adhesive material 27.

Glass cloth was added to the surface of said outer cover material 23a to provide a reinforcing body 28 which was 50mm wide, 200 long, and 3mm high (thick). The glass cloth used was an alkali-free woven cloth (warp density; 14 threads/25mm: woof density; 18 threads/25mm), WF 230-100N, manufactured by Nitto Boseki Co. For the soft epoxy resin, it is preferable to use a composition prepared by adding to a viscous mixture of a dimer acid-modified epoxy resin (e.g., Epikote #871 manufactured by Shell Chemical Co.), a bisphenol A-type epoxy resin (e.g., Epikote #1004, manufactured by Shell Chemical Co.) and a nitrile rubber (Hycar #1001, manufactured by B.F. Goodrich Chemical Co.), an amine-type hardener and powdered talc, asbestos or the like. Then the reinforcing body was heated at $140^{\circ}C$ for 30 minutes, to form an integrated, substantially flat rib-shaped finished product with a total height $h_1$ of 11mm on the steel plate. The dimensions of the reinforcing part 24 were: 50mm in width, 200mm in length, and 11mm in height (h).

A bare 0.7mm-thick steel plate and the same plate reinforced with the reinforcing part 24 were subjected to a strength test under the conditions of a span of 100mm and a bending rate of 5mm/min. The former showed a maximum load of 9kg and a rigidity of 2kg/mm, and the latter, a maximum load of 44kg and a rigidity of 14kg/mm, at a displacement of 4mm.

From these test results, it can be confirmed that the steel plate provided with the reinforcing structure of this invention has markedly improved strength and rigidity over those of non-reinforced steel plate. Also no local strain was evident on the reinforced steel plate. This is attributable to the thin coating of soft epoxy. It should be obvious, furthermore, that because a expanded body is used, the reinforcing body is much lighter than the case wherein a rib of equal height made of a dense material is used for reinforcement.

Another embodiment will be explained, referring to Fig. 8. Plural expanded bodies 30, 31 and 32, and

plural outer covers 33, 34 and 35 are alternately provided to integrally form a substantially flat, rib-shaped reinforcing part 37 having a total height of $h_2$ on the plate-like member 36, for instance, a door outer panel.

Each of the expanded bodies 30, 31 and 32 and the outer covers 33, 34 and 35 is substantialy the same as in the previous embodiment.

In this embodiment, a rib-shaped reinforcing part 37 has a considerable thickness or height $h_2$ and is bonded integrally to the door outer panel 36, achieving improvements in strength and rigidity compared to the first embodiment.

As has been explained previously, according to the present invention, a substantially flat, rib-shaped reinforcing part of predetermined height is integrally bonded to a plate-like member such as a door outer panel for an automobile. The reinforcing part consists of an expandable part and a reinforcing outer cover portion which covers the surface of said foaming part. Thus, the strength and rigidity of the plate-like member are improved.

In addition, a vibration-preventing effect can be expected. The amount of the resinous material used is less than that for the conventional reinforcing member or reinforcing structure as shown in Fig. 1-(A), (B) and (C), and consequently the reinforcing structure of this invention is lighter than the conventional structures.

Hence, the production cost is reduced.

Furthermore, when compared to the reinforcing structure for plate-like members previously proposed by us as shown in Fig. 2-(A) and (B) in which the sides of the reinforcing part are not exposed, the structure of this invention achieves excellent improvement in the strength and rigidity of plate-like members.

In addition, the reinforcing body used in making the reinforcing structure of plate-like members according to this invention may be flatter and thinner than that shown in Fig. 3. This enables easier handling and commercial scale manufacture. For instance, by rolling it into a coil, transportation and storage are facilitated. Also, because it is light, adhesion to a plate-like member can be easily maintained, even if it is aligned vertically on an erect object. That is, during heat treating, its original position will be maintained even if it melts partially.

If the reinforcing body is thin, it will exhibit good conformability to the shape of the plate-like member surface. That is, even when the contours of the plate-like surface are complicated, the reinforcing body can adhere thereto securely. Thus the reinforcing structure exhibits an improved degree of integration with the plate-like member.

Throughout these documents, the terms "integrally bonded", "integration", and the like imply that

- 12 -

0060561

the strength of the adhesive bond between the plate-like member and the reinforcing body approximates that of the cohesive force of the epoxy or other material used in the reinforcing body.

If the reinforcing body for plate-like members according to this invention has a flat surface, the reinforcing body can be inserted between the subject plate-like member and some opposite plate-member so that, when the expandable portion expands and hardens, the subject plate-like member and the opposite plate-like member can be simultaneously reinforced by the reinforcing body. That is, the subject plate-like member can be rigidly bonded to the opposite member to provide a remarkably reinforced structure.

CLAIMS
_____

1. A structure for reinforcing a plate-like member, characterized by

an expandable portion (22); and

a reinforcing cover (23) on a surface of the expandable portion (22);

the expandable portion (22) and the reinforcing cover (23) combining to form a rib-like reinforcing part (24) of predetermined total height;

the rib-like reinforcing part (24) being bonded to the plate-like member (20) to reinforce the plate-like member (20);

the side portions (25, 26) of the expandable portion (22) being not covered by the reinforcing cover (23) so as to be exposed.

2. The structure of claim 1, characterized in that the rib-like reinforcing part (24) has a rectangular cross-section so that the outer surface thereof is flat.

3. The structure of claim 1, characterized in that the plate-like member (20) is an outer panel of an automobile door.

4. The structure of claim 1, characterized by an adhesive material (27) between the plate-like member (20) and the rib-like reinforcing part (24) so that the latter can adhere to the former.

5. The structure of claim 1, characterized in that the rib-like reinforcing part consists of a plurality (30, 31, 32) of expandable portions and reinforcing covers (33, 34, 35) arranged alternatingly.

6. The structure of claim 1, characterized in that the expandable portion (22) is made of a tough epoxy resin.

7. The structure of claim 4, characterized in that the adhesive material (27) is a soft epoxy resin.

8. The structure of claim 1, characterized in that the reinforcing cover (23) is a sheet laminated on the outer surface of the expandable portion

- 15 -

(22) opposite the surface bonded to the plate-like member (20).

9. The structure of claim 1, characterized in that the rib-like reinforcing part (24) is made from an expandable material (22a) and a reinforcing cover (23) which constitute as a whole a thin and flexible sheet.

10. The structure of claim 1, characterized in that the plate-like member (20) is an outer panel of an automobile door and the rib-like reinforcing part (24) span the gap between the outer panel and an inner panel of the automobile door so that the inner and outer panels can be reinforced thereby.

NISSAN MOTOR COMPANY, LTD.
Case: EPC 81249/215(2)
1/4

0060561

# FIG.1(A)
## PRIOR ART

# FIG.1(C)
## PRIOR ART

# FIG.1(B)
## PRIOR ART

NISSAN MOTOR COMPANY, LTD.
Case: EPC 81249/215(2)
2/4

0060561

# FIG.2(A)
PRIOR ART

2(2a)

9

11

12

# FIG.2(B)
PRIOR ART

2(2a)

9

10

11

12

# FIG.3
PRIOR ART

9

2(2a)

11a

13

14

NISSAN MOTOR COMPANY, LTD.
Case: EPC 81249/215(2)
3/4

0060561

# FIG.4(A)

# FIG.4(B)

# FIG.5

# FIG.6

NISSAN MOTOR COMPANY, LTD.
Case: EPC 87249/215(2)
4/4

## FIG.7

## FIG.8